# EUROPEAN PATENT SPECIFICATION

(11) **EP 1 684 460 B1**
(45) Date of publication and mention of the grant of the patent: **23.07.2014**
(21) Application number: 03818887.6
(22) Date of filing: 29.10.2003
(51) Int. Cl.: G06F 21/34, H04L 29/06

(54) **A method of internet clearance security certification and ic card certification hardware**
Verfahren der Internet-Freigabesicherheitszertifikation und Chipkartenzertifikations-Hardware
ProcéPdé de certification de securité d'habilitation d'internet et de materiel de certification de carte à circuit integré

(43) Date of publication of application: 26.07.2006
(73) Proprietor: Lin, Hui, Taiwan (TW)
(72) Inventor: Lin, Hui, Taiwan (TW)
(74) Representative: Lang, Christian
(86) International application number: PCT/CN2003/000913
(87) International publication number: WO 2005/041481

(56) References cited:
- WO-A-02/50743
- CN-A- 1 181 560
- CN-A- 1 275 744
- CN-Y- 2 489 384
- FR-A- 2 832 576
- JP-A- 2003 006 547
- US-B1- 6 359 699
- FERREIRA R C: "THE SMART CARD: A HIGH SECURITY TOOL IN EDP" PHILIPS TELECOMMUNICATION REVIEW, PHILIPS TELECOMMUNICATIE INDUSTRIE N.V. HILVERSUM, NL, vol. 47, no. 3, 1 September 1989 (1989-09-01), pages 1-19, XP000072642

## Description

### Field of the invention

The present invention relates to a method and system for Internet entrance security identification and IC card verification hardware device more particularly, the invention relates to a system and method that use a verification hardware device as Internet entrance security identification.

### Background of the Invention

In general, Internet security system and method is a process of cryptographing information in the web server to prevent info disclosing. Many computer programs and logic have been designed to cryptograph information and to fight against the hacker, however those programs can't yet prevent from the hacker attack completely.

The user login system is to qualify the user's entrance of a website. To date the users have to sign in ID and passwords of the website to enter. If both are correct, the user can access the main page of the website. This simple system raises a risk that anyone else has both of the ID and password can easily enter the user's main page, and can also query the secret information and record of the user. Considering of the cryptographing technique of the Application Server (AP Server) nowadays, it still have chance to allow the hacker to break the code. In the global village century, Internet communications shorten the distance of the real world. User can access Internet anytime at any place of the world by different computers or other communication device. Users can go on line by computers in the library, coffee shop etc...

As the difficulty of setting authority and staging of nowadays' technique, those secret information can be easily acquired by the next user when the former user forgets to logout or by hackers who break the system and further use those personal secret information to perform illegal trade, and those result in the loss of the users.

Current Internet security system is leaky in many aspects as mentioned below.
1. Hackers break the user's code by Dictionary Attack, and imitate as the user
2. Hackers intercept the crude information during TCP/IP protocol and then massage the information.
3. The Hackers intercept transporting data on the LAN
4. Hackers break the user's code by using Dictionary Attack, and imitate as the user

It's the easiest and most dangerous way to login with user's ID and password. The reasons are listed as followed:
1. Most people choose their password based on easiness to remember. Few people would choose a password with letters and numerals in random combination. The famous cryptology master "Daniel Klein" declared that 40% of the user's password can be broken easily by means of "Dictionary Attack". At the present time, it's scattered with various computer programs performing decoding project designed by students and system experts and hackers in the world of Internet. Those are tools for cracker to invade.
2. Currently, the information system is getting more and more complex. Different password is needed when entering different operating system. Few people can memorize more than three distinct passwords with eight characters. This leads to most people would write down those passwords and put them in a safe and convenient place. Obviously it provides an additional channel for cracker to invade.
3. Even if the clients haven't made those above-mentioned mistakes, it still has a chance for cracker to invade. The password is in a form of plaintext before transferring to the AP Server. Hackers can intercept the password in the route of transferring and then imitate as the user invading the system. Many people have a perception that it can prevent from cracker invasion by simply renting a dedicated line. It's wrong because of the data in the dedicated line is exchanged through public exchange circuit. Once the dedicated line is established, the data-transferring route is fixed. The hacker can concentrate in intercepting data on the fixed route.
4. Hackers intercept the crude information during TCP/IP protocol and then massage the information.

The Internet communication protocol is TCP/IP Before data transferring between two computers, those two computers have to finish three-way Handing Shaking. It's a good opportunity for crackers to invade during this period of time.

The data transferring between two computers is through the public Internet. Since those data being transferred is in the form of plaintext, this give rise to the problem that each computer on the Internet can sniff information therein.

In some cases, the cracker wants to grasp all information of the invaded computer, and then imitate as the user. Not only do they the have privilege of the user but also they can send a large amount of useless information back to the user's computer to collapse it's system. Even worse the cracker can doctor up the user's data or release malignant signals, this situation the blame is imputed on the guiltless user.

If the user goes on line by computer for public use, the computer connects to Internet by LAN (Local Area Network). Within LAN, all output information is in the form of broadcasting, and each computer within the LAN can receive and sniff this information. Even worse, once the password is cracked, the system could be signed in illegally, and something unauthorized could occur, such as changing data, spreading fake messages, stealing or deleting information for commercial or noncommercial reasons,..., etc.

For the above problems, the leak of Internet security should be mended. To overcome the problems and defects in the prior art described above, one identity confirmation process should be set for double check except for only password.

FR2832576 discloses an identification process using a challenge provided by a verification server and transformed with the user authentication function from the SIM. Both an access point server and the verification server are used for verification.

### Summary of the Invention

The present invention relates to a method and a system for Internet entrance security identification defined by the subject matter of independent claims. The IC card memorizes an identification code (ICCID) and international verification code (GLN). This IC card reading apparatus is conjugated to PC easily by USB interface or PS2 plug or by hardware having wireless or infrared transferring protocol. Owing to the easy set up of this IC card reading device, it can be applied extensively. This IC card and IC card reading apparatus as the verification hardware can also be used as data storage device, and data can be stored not only on hard disk but also on this mobile IC verification hardware device. It makes data reading and depositing more secret, mobile and safer. This IC verification hardware device is further applied to all PC peripheral hardware. This verification hardware device serves as a key to access the computer. It is more acceptable for the computer user. Because the procedure of other verification technology products are complicate, it is un-convenient for the user to handle and leads to giving up using those verification system and further repeals Internet transaction.

### Brief Description of the Drawings

Fig. 1 is a diagram illustrating the operation procedure of the present invention;
Fig. 2 is a diagram showing apparatuses that IC card device of the present invention can couple with;
Fig. 3 is a diagram illustrating the login process of the present invention;
Fig. 4 is a diagram showing embodiment of the IC card device of the present invention;
Fig. 5 is a diagram showing embodiment of the present invention's IC card device in PCMCIA interface apparatus;
Fig. 6 is a diagram showing alternative embodiment of the present invention's IC card device integrated with flash memory;
Fig. 7 is a diagram illustrating the present invention's IC card device integrated with flash memory plugged into computer chassis.

### Detailed Description of the Preferred Embodiments

The technical character of the present invention is to create an IC card which has records an identification code (ICCID) and an international verification code (GLN). The IC card is put into an IC card reading apparatus (reader). This IC reading apparatus is connectable to a PC (Personal computer) easily by using a USB interface or a PS2 plug or by hardware with a wireless infrared transferring protocol. This IC card and IC card reading apparatus serve as a verification hardware. Users have to input a username and a password when he (or she) desires to connect to Internet. The message is processed through program embedded inside IC card and further delivered to a Certification Authority (CA) server to be enciphered or deciphered. This ICCID number is further confirmed in a CA database. If the ICCID number is correct, then a Random number and KI number are given. This KI number is used as a CA Server Result and can be used as a record of the login frequency, authority range, and user validation.

After the first step of IC card verification, a verification program of the common AP Server will receive ICCID number, Client Result of the IC card, user name, and password.

The Random number generated from CA server is transmitted back to IC card. Again, through the program built in the IC card, the Random number and ICCID are enciphered into Client Result. The client result, user name, and password are transferred to the AP Sever. The AP Server checks the user name and password firstly in a database therein and then checks an allowed use period of the user. If above procedure is passed, the information is transferred from AP Server to CA server to check ICCID number and the Client Result next.

ICCID is decoded in a specific method and match with a correspondence code recorded in CA server. If the correspondent code is found in CA server, the client result is valid in CA server.

If the first step of verification is passed, the AP Server verification program will receive the ICCID number and the Client result within the IC card and the Username and the password that user key in, at the mean while the AP Server will check if the user name and the password are right in a database thereof, and also check if the user's useful-life is overdue. If the above procedure is passed, the information is transferred from the AP Server to the CA server to check the ICCID number and the Client Result again. The CA server will decode the value of the ICCID number in a specific signal flow and also check the value in it's own verification database, to find the correspondent cipher of the ICCID number to verify with said validated server result. If the server result matches with the client result, the second step of verification is passed. Only it is confirmed after the double check of the user's identity in the AP Server and CA server, then the user can enter a login window and go into the web page. At this moment, the server result is emptied to allow the next login. If not matched, the CA sever will send back a failed message to AP Server to reject access.

In the following description, referring to the drawings.

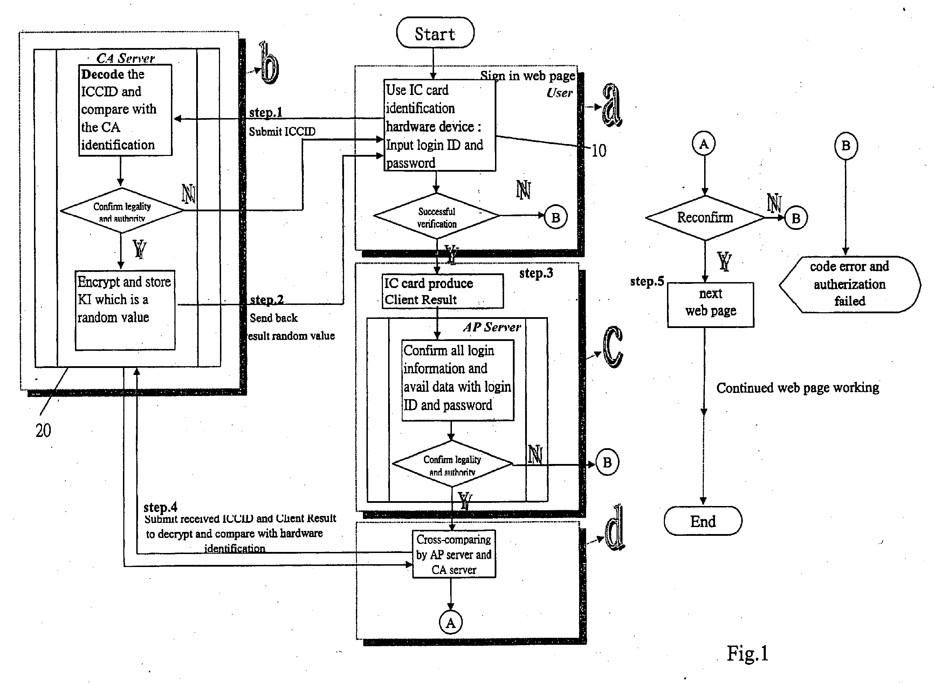

Fig. 1 illustrates procedures of flow sheet of this invention, comprises a, b, c, d four main processes and procedures from step 1 to step 5 of legal login process.

In Process a: an IC card identification hardware device comprising an IC card and a card reader is used to login into an AP Server. The login ID and password are inputted and submitted.

In Process b: an IC card transfers login process and ICCID to CA server (step 1). CA server will decode ICCID and compare with the data in a database thereof, and confirm legality and authority of ICCID. If it's confirmed, the CA server will record in its database and generates a Server Result, which is a random value, then report the value to IC card (step 2).

In Process c, when process b is confirmed, IC card will generate from the random value from the CA server and the ICCID a Client Result (step 3), transfer process, ICCID, and Client Result to AP Server. With login ID and password, AP Server will confirm all login information and avail date.

In Process d, when process c is confirmed, AP Server will submit received ICCID and Client Result to CA server to decrypt and compare with hardware identification (step 4).

For further description below, in process a, user inserts an IC card having built-in ICCID and GLN code, into a card reader apparatus, which is connectable to a PC easily by using USB interface or PS2 plug or by using a hardware having wireless or infrared device as an identification hardware device. Using this hardware device to open login process of AP Server and then submit login ID and password.

In process b, when user submits ID and password, the program built in the IC card will transfer ICCID code to a CA server. The CA server will decode the ICCID, compare with the CA identification database, produce an authorized (Validate=Y) EKI value, then decode the value to a KI value and generate a random value, and encrypt and store KI as a hardware identification's successful verification (Server Result). This result can also record the access times of a user, confirm legitimacy and limits of authority of login AP Server of ICCID. When hardware satisfies identification, CA server will send result random value to an IC card as a key value. If an IC card fails in cross comparison of authorization (Validate=N), the system inform the user that the login is not successful.

If it is passed in process b, then the process enters into the process c. An AP Server will receive the key value and the ICCID code of IC card, and submitted the login information, and then confirm the information and available date.

In process d, when process c is confirmed, the AP Server will send received key and ICCID code to the CA server for further confirmation. The CA server will firstly decode ICCID, and compare the value with the data in a database thereof. If this ICCID has a relative valid EKI, use the key value to decode EKI to compare with Server Result. If matched, the user can login into the AP Server, a web page for example, and CA server will clean out its Server Result for next use. If not matched, CA server will tell AP Server ICCID code is in error and authorization fails.

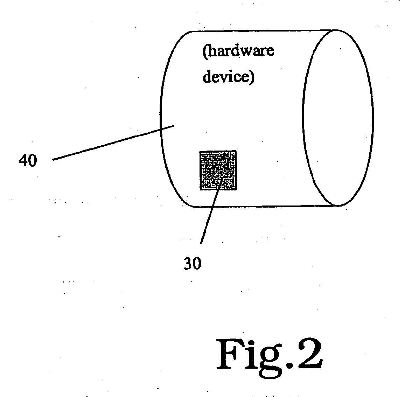

Fig. 2 illustrates exemplary hardware device that could be used to implement the present invention. The IC card 30 is burned with a firmware into a chip in the card. It's hard to fake and copy. The Identification hardware 40 is the IC card 30 reader apparatus, which can be a hardware compatible to USB, PS2 interface, wireless communication device, or storage medium such as flash memory.

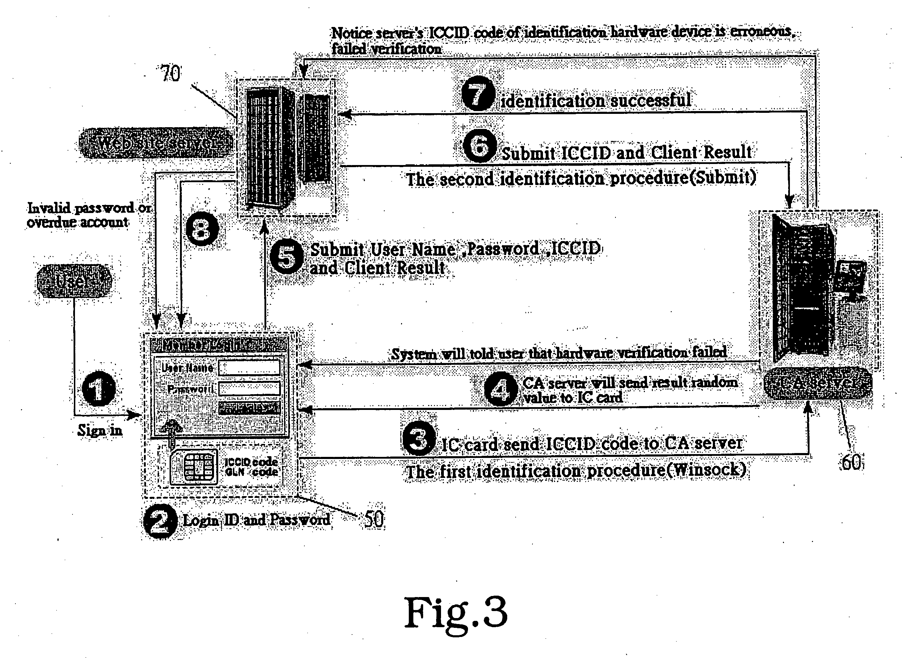

Fig. 3 illustrates the routs of the present invention. The actual login operation procedure, from submitting to authorization, contains totally 8 routes. Route 1 indicates a user using identification hardware (with IC card) 50 installed in client computer to login web server 70. In route 2 a user submit login ID and password in login window (can be a web page). This will act on route 3, which IC card built-in program will guide login procedure to CA server 60. Route 3 is the first identification procedure (Winsock) of the prevent invention. In this process the CA server 60 will compare ICCID code and calculate a Server Result. When the hardware identification is confirmed, it will lead route 4. In route 4 when IC card receive random value produced from CA server 60, it will calculate and encrypt to a Client Result. This Client Result will be used to compare for AP Server in second certification procedure.

If the first certification procedure succeeds, then it will go to route 5. Web server 70 will receive ICCID code, Client Result, and username and password submitted by the login user. If submitted data is correct, in route 6 proceeding to the second certification procedure, the ICCID code and Client Result back to CA server 60 to confirm with Server Result. If pass, route 7 will go in CA server 60 to tell web server 70 certification confirmed. After double check to make sure user is legal, web server 70 can login to access, and the final route 8 will go to clean up Server Result in CA server 60. If it fails in route 6, web server 70 will receive a message of ICCID error from the CA server 60 and deny to be accessed.

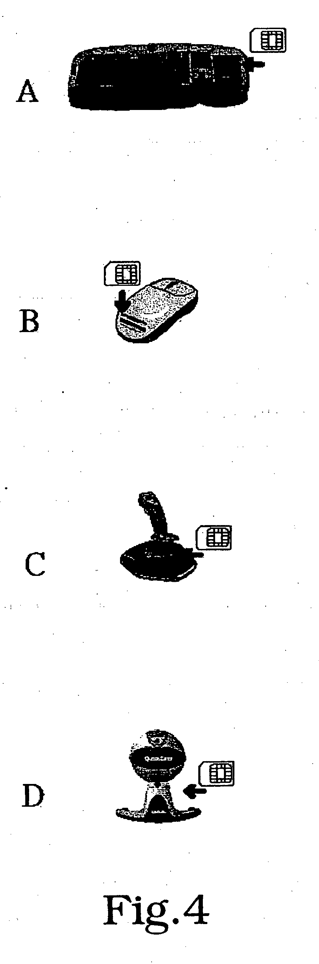

Fig. 4 is a diagram showing exemplary hardware devices for practicing the presenting invention. Besides directly installed in computer via a USB, a PS2 interface, a wireless, or a IR hardware device, the IC card reader apparatus can also be set within keyboard (A), mouse (B), joystick (C), or even web camera (Web Cam, D) to materialize hardware identification.

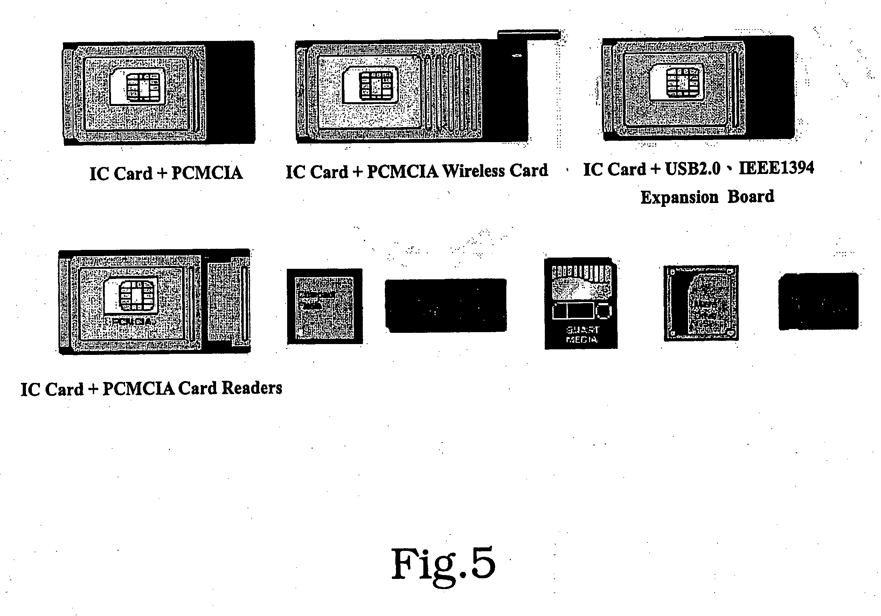

Fig. 5 is a diagram showing IC card reader device set on PCMCIA (Personal Computer Memory Card International Association) interface apparatus, as application of mobile notebook.

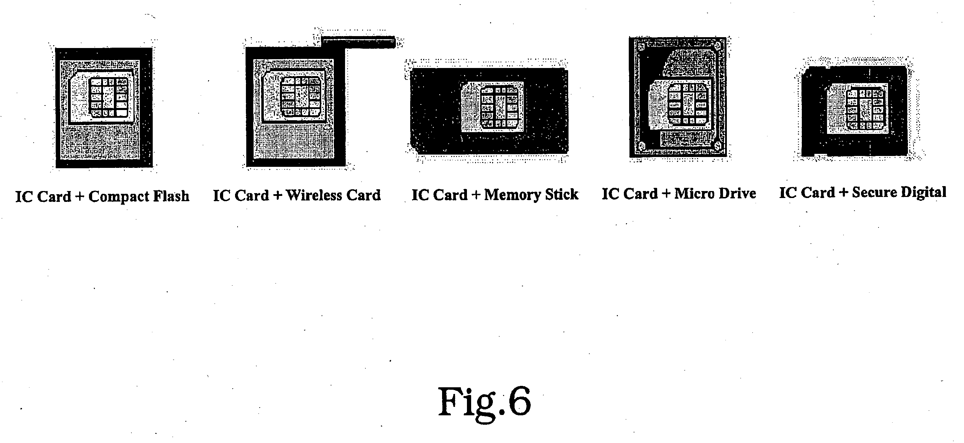

Fig. 6 is a diagram showing IC card device set with flash memory. This combined set can storage and keep also security, mobility, and privacy of data.

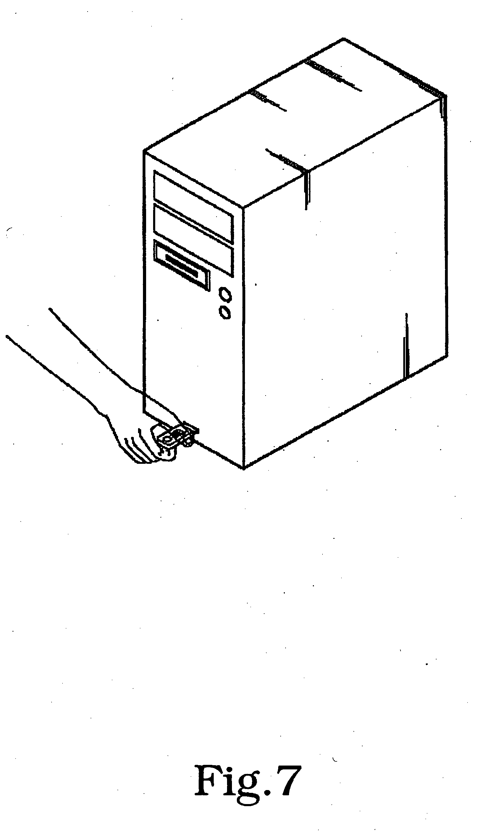

Fig. 7 is foregoing flash memory and IC card device integrated apparatus plugging into computer. Using USB interface device can easily access and work.

The present invention can provide highly standard class security of application (AP) server system on Internet by many encryptions and cross confirming double check system. The IC card identification hardware device can use as a private verification key to access not only on Internet but also many information systems of computer. The foregoing describing of the preferred embodiment of the invention is for the purposes of illustration and description. It is not intended to exhaustive or to limit the invention to the precise from disclosed.

## Claims

1. A method for Internet entrance security identification by using an IC card built with an identification code and an International identification code, and an IC card reader apparatus installed in a computer as an identification hardware device, the method comprising the steps of:
A: using an IC card identification hardware device (50) comprising an IC card and a reader to login an AP Server (70), the user inputting a login ID and a password to the hardware device and then submit the login ID and password;
B: the IC card transferring the identification code to a CA server (60), the CA server will decode the identification code and compare it with codes recorded in a database thereof, and confirm legality and authority of the identification code, if it's confirmable that the identification code is a permissible ID, CA server will generate a random number and KI number, wherein the KI number is stored for use as a Server Result, and then report the random number to the IC card;
C: if in process B it is confirmed that the identification code is a permissible ID, the IC card decodes the identification code and uses the random number from the CA server and the identification code which are enciphered into a Client Result, and then transfers the identification code and the Client Result to an AP Server, with the login ID and password, the AP Server will confirm all login information and user's using period;
D: if in process c, it is confirmed that the AP Server confirms that the all login information is permissible and the user period is not overdue, the AP Server will submit received identification code and Client Result to the CA server, the CA server will decode the value of the identification code and check the value in it's verification database, to find whether the client result matches with the server result.

2. A hardware system for Internet entrance security identification,comprising:
an IC card (30) built with an identification code and an International identification code; the IC card being built with a program for transferring the identification code to a CA server and for transfering the identification code and a Client Result to an application server,
an IC card reader apparatus capable of being connected to a computer as an identification hardware device (50) and a USB interface; the IC card reader serving for receiving the IC card for reading data in the card and transferring data in the IC card;
a CA server (60) is configured for decoding the identification code from the IC card, for generating a random number and KI number, wherein the random number is reported to the IC card, and the KI number is stored for use as a Server Result, and the CA server is configured for receiving the identification code and the Client Result from an AP server and for decoding the identification code and cheeking the value in it's verification database, to find whether the client result matches with the server result;
the IC card is configured for enciphering the random number received from the CA server and the identification code, wherein the enciphered random number and identification code are the Client Result; and
an AP server (70) confirming all login information and user's using period and if the confirmation is passed, sending the identification code and the Client Result to the CA server.

3. The system of claim 2, wherein the IC card identification hardware device is a PS2 compatible interface apparatus.

4. The system of claim 2, wherein the IC card identification hardware device is a wireless communicable apparatus.

5. The system of claim 2, wherein the IC card identification hardware device is an IEEE1394 (Institute of Electrical and Electronic Engineers 1394) compatible interface apparatus.

6. The system of claim 2, wherein the IC card identification hardware device is an IR communicable apparatus.

7. The system e of claim 2, wherein the IC card identification hardware device is a flash memory.

8. The system of claim 2, wherein the IC card identification hardware device is a PCMCIA-compliant interface apparatus.

9. The system of claim 2, wherein the IC card identification hardware device is one of a keyboard, a mouse and a joystick.

10. The system of claim 2, wherein the IC card identification hardware device is a Web Camera.

## Patentansprüche

1. Verfahren für die Sicherheitsidentifizierung beim Internetzugang unter Verwendung einer IC - Karte, die mit einem Identifikationsschlüssel und einem internationalen Identifikationsschlüssel ausgebildet ist; und einer IC - Karten - Lesevorrichtung, die als Identifikationshardwarevorrichtung in einem Computer installiert ist, wobei das Verfahren die Schritte umfasst:
A: Verwenden einer IC - Karten - Identifikationshardwarevorrichtung (50), die eine IC - Karte und einen Leser zum Einloggen in einen AP - Server (70) umfasst, wobei der Benutzer eine Login - ID und ein Passwort in die Hardwarevorrichtung eingibt und dann Login - ID und Passwort abschickt;
B: Übertragen des Identifikationsschlüssels der IC - Karte an einen CA - Server (60), wobei der CA- Server den Identifikationsschlüssel entschlüsselt und ihn mit Schlüsseln vergleicht, die in einer seiner Datenbanken gespeichert sind, und die Legalität und Authentizität des Identifikationsschlüssel bestätigt, wenn bestätigt werden kann, dass der Identifikationsschlüssel eine zulässige ID ist, wobei der CA - Server eine Zufallszahl und eine KI - Zahl erzeugt, und wobei die KI - Zahl zur Verwendung als Serverergebnis gespeichert wird, und wobei dann die Zufallszahl an die IC - Karte berichten wird;
C: wenn im Vorgang B bestätigt wird, dass der Identifikationsschlüssel eine zulässige ID ist, wird die IC - Karte den Identifikationsschlüssel entschlüsseln und die Zufallszahl von dem CA - Server und den Identifikationsschlüssel verwenden, welche in ein Clientergebnis verschlüsselt werden, und dann den Identifikationsschlüssel und das Clientergebnis an einen AP - Server übertragen, wobei der AP - Server mit Login - ID und Passwort alle Logininformationen und Nutzungszeiträume des Benutzers bestätigen wird;
D: wenn in dem Vorgang C bestätigt wird, dass der AP - Server bestätigt, dass alle Logininformationen zulässig sind und der Benutzungszeitraum nicht überschritten ist, wird der AP - Server den empfangenen Identifikationsschlüssel und das Clientergebnis an den CA - Server abschicken, wobei der CA - Server den Wert des Identifikationsschlüssel entschlüsseln wird und den Wert in seiner Verifikationsdatenbank überprüfen wird, um zu bestimmen, ob das Clientergebnis mit dem Serverergebnis übereinstimmt.

2. Hardwaresystem für die Sicherheitsidentifizierung beim Internetzugang, das umfasst:
eine IC - Karte (30), die mit einem ldentifikationsschlüssel und einem internationalen Identifikationsschlüseel ausgebildet ist, wobei die IC - Karte mit einem Programm zum Übertragen des Identifikationsschlüssel an einen CA- Server und zum Übertragen des Identifikationsschlüssel und eines Clienkergebnisses an einen Anwendungserver ausgebildet ist;
eine IC - Karten - Lesevorrichtung, die geeignet ist, mit einem Computer als eine Identifikationshardwarevorrichtung (50) und einer USB Schnittstelle verbunden zu werden, wobei der IC - Kartenleser zum Empfangen der IC - Karte zum Lesen von Daten auf der Karte und dem Übertragen von Daten auf die IC - Karte dient;
einen CA Server (60), der darauf ausgelegt ist, den identifikationsschlüssel aus der IC - Karte zu entschlüsseln, um eine Zufallszahl und eine KI - Zahl zu erzeugen, wobei die Zufallszahl an die IC - Karte berichtet wird und wobei die KI - Zahl zur Verwendung als ein Serverergebnis gespeichert wird, wobei der CA - Server dafür ausgelegt ist, den Identifikationsschlüssel und das Clientergebnis von einem AP - Server zu empfangen, den Identifikationsschlüssel zu entschlüsseln und den Wert in seiner Verifikationsdatenbank zu überprüfen, um zu bestimmen, ob das Clientergebnis mit den Serverergebnis zusammenpasst,
wobei die IC - Karte dafür ausgelegt ist, die von dem CA - Server empfangene Zufallszahl und den Identifikationsschlüssel zu verschlüsseln, wobei die verschlüsselte Zufallszahl und der Identifikationsschlüssel das Clientergebnis sind; und
wobei ein AP - Server (70) alle Logininformationen und Benutzungszeiten des Benutzers bestätigt und, wenn die Bestätigung erfolgt, den Identifikationsschlüssel und das Clientergebnis an den CA - Server schickt.

3. System nach Anspruch 2, wobei die IC - Karten - Identifikationshardwarevorrichtung eine PS2 kompatible Schnittstellenvorrichtung ist.

4. System nach Anspruch 2, wobei die IC - Karten - Identifikationshardwarevorrichtung eine drahtlose Kommunikationsvorrichtung ist.

5. System nach Anspruch 2, wobei die IC - Karten - Identifikationshardwarevorrichtung eine IEEE1394 (Institute of Electrical and Electronic Engineers 1394) kompatible Schnittstellenvorrichtung ist.

6. System nach Anspruch 2, wobei die IC - Karten - Identifikationshardwarevorrichtung eine IR kommunizierende Vorrichtung ist.

7. System nach Anspruch 2, wobei die IC - Karten - Identifikationshardwarevorrichtung ein Flashspeicher ist.

8. System nach Anspruch 2, wobei die IC - Karten - Identifikationshardwarevorrichtung eine PCMCIA konforme Schnittstellenvorrichtung ist.

9. System nach Anspruch 2, wobei die IC - Karten - Identifikationshardwarevorrichtung eine Vorrichtung aus einem Keyboard, einer Maus und einem Joystick ist.

10. System nach Anspruch 2, wobei die IC - Karten - Identifikationshardwarevorrichtung eine Webcam ist.

## Revendications

1. Procédé d'identification de sécurité d'accès à internet en utilisant une carte à circuit intégré avec un code d'identification et un code d'identification internationale et un appareil lecteur de carte à circuit intégré installé dans un ordinateur comme dispositif matériel d'identification, le procédé comprenant les étapes :
A : d'utilisation d'un dispositif matériel d'identification de carte à circuit intégré (50) comprenant une carte à circuit intégré et un lecteur pour ouvrir une session sur un serveur AP (70), l'utilisateur entrant un nom d'utilisateur et un mot de passe dans le dispositif matériel et soumettant ensuite le nom d'utilisateur et le mot de passe ;
B : la carte à circuit intégré transférant le code d'identification à un serveur de certification (60), le serveur de certification décodera le code d'identification et le comparera aux codes enregistrés dans une base de données de celui-ci et
confirmera la légalité et l'autorité du code d'identification ; s'il peut être confirmé que le code d'identification est une identification admissible, le serveur de certification générera un nombre aléatoire et un numéro KI, le numéro KI étant mémorisé pour être utilisé comme un résultat serveur et reporter ensuite le nombre aléatoire à la carte à circuit intégré ;
C : s'il est confirmé dans le processus B que le code d'identification est une identification admissible, la carte à circuit intégré décode le code d'identification et utilise le nombre aléatoire du serveur de certification et le code d'identification qui sont chiffrés dans un résultat client et transfère ensuite le code d'identification et le résultat client à un serveur AP avec le nom d'utilisateur et le mot de passe, le serveur AP confirmera toutes les informations d'ouverture de session et la période d'utilisation de l'utilisateur ;
D : s'il est confirmé dans le processus C que le serveur AP confirme que toutes les informations d'ouverture de session sont admissibles et que la période de l'utilisateur n'est pas échue, le serveur AP soumettra le code d'identification reçu et le résultat client au serveur de certification, le serveur de certification décodera la valeur du code d'identification et vérifiera la valeur dans sa base de données de vérification pour trouver si le résultat client correspond au résultat serveur.

2. Système matériel pour identification de sécurité d'accès à internet comprenant :
une carte à circuit intégré (30) construite avec un code d'identification et un code d'identification internationale, la carte à circuit intégré étant construite avec un programme pour transférer le code d'identification à un serveur de certification et pour transférer le code d'identification et un résultat client à un serveur d'application,
un appareil lecteur de carte à circuit intégré capable d'être relié à un ordinateur en tant que dispositif matériel d'identification (50) et une interface USB, le lecteur de carte à circuit intégré servant à recevoir la carte à circuit intégré pour lire des données dans la carte et pour transférer des données dans la carte à circuit intégré,
un serveur de certification (60) est configuré pour décoder le code d'identification de la carte à circuit intégré pour générer un nombre aléatoire et un numéro KI, le nombre aléatoire étant reporté à la carte à circuit intégré et le numéro KI étant mémorisé comme résultat serveur et le serveur de certification étant configuré pour recevoir le code d'identification et le résultat client d'un serveur AP et pour décoder le code d'identification et pour vérifier la valeur dans sa base de données de vérification pour trouver si le résultat client correspond au résultat serveur,
la carte à circuit intégré est configurée pour déchiffrer le nombre aléatoire reçu du serveur de certification et le code d'identification, le nombre aléatoire chiffré et le code d'identification étant le résultat client et
un serveur AP (70) confirmant toutes les informations d'ouverture de session et la période d'utilisation de l'utilisateur et si les informations sont passées, l'envoi du code d'identification et du résultat client au serveur de certification.

3. Système selon la revendication 2, le dispositif matériel d'identification de carte à circuit intégré étant un appareil à interface compatible PS2.

4. Système selon la revendication 2, le dispositif matériel d'identification de carte à circuit intégré étant un appareil pouvant communiquer sans fil.

5. Système selon la revendication 2, le dispositif matériel d'identification de carte à circuit intégré étant un appareil à interface compatible IEEE1394 (Institut des ingénieurs électriciens et électrotechniciens 1394).

6. Système selon la revendication 2, le dispositif matériel d'identification de carte à circuit intégré étant un appareil pouvant communiquer par infrarouge.

7. Système selon la revendication 2, le dispositif matériel d'identification de carte à circuit intégré étant une mémoire flash.

8. Système selon la revendication 2, le dispositif matériel d'identification de carte à circuit intégré étant un appareil à interface compatible PCMCIA.

9. Système selon la revendication 2, le dispositif matériel d'identification de carte à circuit intégré étant l'un des élément suivants un clavier, une souris et une manette de jeu.

10. Système selon la revendication 2, le dispositif matériel d'identification de carte à circuit intégré étant une caméra web.
